# EUROPEAN PATENT APPLICATION

(11) **EP 2 180 703 A1**
(43) Date of publication of application: **28.04.2010**
(21) Application number: 09012366.2
(22) Date of filing: 30.09.2009
(51) Int. Cl.: H04N 7/15, H04H 60/58, H04N 7/14, G01S 3/80, G06K 9/32

(54) **Displaying dynamic caller identity during point-to-point and multipoint audio/videoconference**

(30) Priority: 02.10.2008 US 244582
(71) Applicant: POLYCOM, INC., Pleasanton, California 94588 (US)
(72) Inventor: Rahman, Mohammed, Pflugerville Texas 78660 (US)
(74) Representative: Käck, Jürgen

(57) **Abstract**

A method for efficiently determining and displaying pertinent information determined from multiple input and calculated parameters associated with a videoconference call. The method for efficiently determining and displaying this personal information is performed using input from the user at an endpoint and calculated information throughout the videoconference to present personal information, about the currently speaking person, to all participants. Videoconferencing systems are typically used by multiple people at multiple locations. The method of this disclosure allows for more user interaction and knowledge transfer amongst the participants. By sharing information between the different locations participants are more aware of who is speaking at any given time and the importance to be applied to what that particular person is saying.

## Description

### FIELD OF THE INVENTION

The disclosure relates generally to the field of videoconferencing. More particularly, but not by way of limitation, to a method of identifying a current speaker in a videoconferencing environment and presenting information about the current speaker in an information box.

### BACKGROUND OF THE INVENTION

In modem business organizations it is not uncommon for groups of geographically disperse individuals to participate in a videoconference in lieu of a face-to-face meeting. Companies and organizations increasingly use videoconferencing to reduce travel expenses and to save time. However, the financial and time savings may be offset by the inability of a videoconferencing system to perfectly emulate what participants might expect during a typical face-to-face meeting with other participants. Important sensory information, taken for granted by in person participants of a face-to-face meeting, can be noticeably absent during a videoconference and inhibit efficient and effective communication.

Due to the nature of videoconferencing systems, disparate meeting locations linked via a videoconference usually contain multiple participants. In such situations, it may be beneficial for a listening participant to identify a speaking participant so he can put the auditory information he is receiving into context. Spoken dialogue can have different meaning or importance depending on the speaker. Unfortunately, it is often the case that identification of the speaker by a participant is delayed or made impossible by the limitations of the videoconference technology in use. For example, the video screen may be too small or of poor quality and thus participants may not be able to perceive the movement of a distant participant's lips or his body language. Further, the directional properties of sound may be lost as it is reproduced at remote locations.

### SUMMARY OF THE INVENTION

The invention is defined in claims 1, 8, 14 and 15, respectively. In one embodiment this disclosure provides a method of determining and displaying personal information to aid other participants in a multi-party multi-location videoconference or mixed audio only and video conference. During the conference different people will be speaking at different times and the currently speaking participant may be identified by detecting audio input at an endpoint of a videoconference and using it to identify who is currently speaking. Once identified personal information associated with the identified person may be provided to other endpoints of the conference as an aid to the participants at these other endpoints. For example, they will be presented the name and title of the currently speaking participant in case they do not have personal knowledge of the identifying characteristics of that person.

In another embodiment multiple types of identification information are stored in an effort to increase the accuracy of the automatic identification of the currently speaking participant. In this embodiment each of the different types of identification information are processed independently and the results of the independent processing are compared to determine if consistent results have been found prior to providing the personal information. Additionally, if no consistent results are obtained it may be possible for a call moderator to enter identification information and this updated identification information may be subsequently used to improve the accuracy of future automatic identification.

### BRIEF DESCRIPTION OF THE DRAWINGS

Figure 1 shows, an example corporation with multiple locations and multiple participants as they might be located for a videoconference.

Figure 2 shows, in illustrative form, a process to define conference participants at one or more locations of a multi-party, multi-location videoconference.

Figure 3 shows, in illustrative form, a process to identify a currently speaking participant of a videoconference.

Figure 4 shows, an alternate embodiment to identify a currently speaking participant of a videoconference.

Figure 5 shows, a block diagram of one embodiment of a videoconferencing system.

### DETAILED DESCRIPTION

In a typical, face-to-face meeting, determination by a listening participant of which participant is currently speaking is usually immediate and effortless. There is a need for a videoconferencing system to emulate this routine identification task in the context of a videoconference. However, even if the listening participant is able to discern which person is speaking, he might not know the name and title of the speaker. There is also a need for a system to present personal identification information of the current speaker in a videoconferencing environment.

Disclosed are methods and systems that fulfill these needs and include other beneficial features. In a particular embodiment, videoconferencing devices are described that present a current speaker's personal information based on user defined input parameters in conjunction with calculated identification parameters. The calculated identification parameters comprise, but are not limited to, parameters obtained by voice recognition and/or face recognition software, directional microphones, and other environment-sensing technology.

The following disclosure further describes methods and systems for identifying and presenting personal information about a current speaker in the context of videoconferencing systems. One of ordinary skill in the art will recognize that the inventive nature of this disclosure may be extended to other types of multi-user communication technologies that are shared throughout a community or a business organization, such as, shared workspaces, virtual meeting rooms, and on-line communities. Note that although the inventive nature of this disclosure is described in terms of a videoconference it can also be applied to audio only conferences, telepresence, instant messaging, etc.

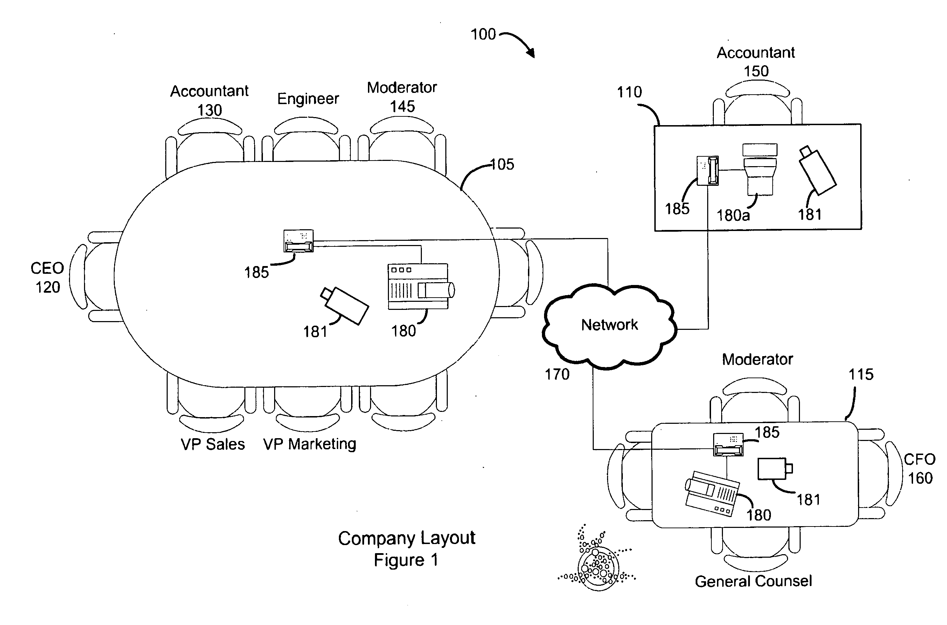

In modem business organizations, it is not uncommon for groups of geographically disperse individuals to participate in a simultaneous audio conference, videoconference, or a combination of both. For example, referring to Figure **1****,** Company A is shown in configuration **100** with offices in New York **(105),** Houston **(110),** and Delaware **(115).** Company A conducts monthly, company-wide status meetings via videoconference connecting through network **170.** Each location is equipped with a speaker phone **(185),** camera **(181)** and a display device **(180, 180a).** During such meetings, current videoconference systems allow the geographically disperse participants to see and hear their remote colleagues but several limitations may hinder the effectiveness of the experience.

First, it may be difficult for a participant to determine who is speaking at a remote site. Current systems often automatically display the name of location at which a speaker is located and enlarge the video feed from that location but, due to limitations in video and audio reproduction, a remote participant might still be unable to discern the identity of the speaker. As such, an accountant **(150)** in Houston may be alerted that the voice he is hearing is from a person in the company headquarters in New York but to whom it belongs may be unknown. Without this information, a statement by the CEO **(120)** is potentially indistinguishable for remote participants from a statement by an accountant **(130)** because both the CEO **(120)** and accountant **(130)** are in the same location. Such a scenario is clearly not optimal.

Second, in larger corporations, even if a participant can identify the speaker, he might not know his name and title. Again, to optimally participate in the meeting, each participant would benefit by knowing if the unknown face of the person speaking in New York belongs to a peer or a superior (*e.g.*, vice president **125).** By automatically displåying "Personal Information" of the speaking participant, the above drawbacks may be marginalized and videoconferences may more effectively emulate face-to-face meetings and perhaps even provide some additional information not available without a technological aid. The "Personal Information" displayed can include, but is not limited to, name, title, location, and other information pertinent to the meeting.

Display of speaker identity during point-to-point and multipoint videoconferences can be implemented in a variety of ways. In one embodiment, a multitude of devices and technologies work in concert to achieve timely speaker identification. For example, video capture devices and directional microphones transmit environmental data to a processing system running voice recognition and face recognition software against a repository of participant information. Further, moderators at one or more sites may monitor the accuracy of personal information displayed and, in the case of error, make a correction to the result obtained in the processing system. Also, learning algorithms may analyze these corrections, thereby increasing future accuracy.

As used herein, a "videoconference" can be any combination of one or more endpoints configured to facilitate simultaneous communication amongst a group of people. This includes conferences in which some participant locations connect solely through an audio connection while others connect through both an audio and video connection. In such an instance, it is envisioned that upon speaking, the personal information of the audio-only participant would be displayed to the locations equipped with video capability. In one embodiment, voice recognition software would determine the identity of the audio-only participant.

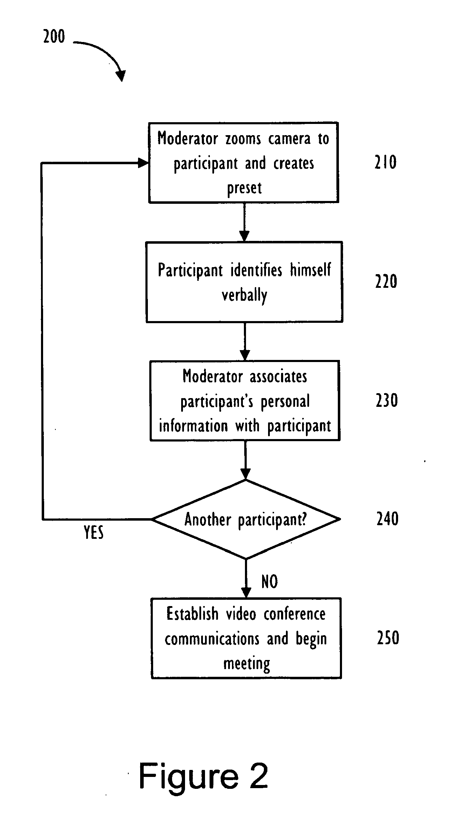

Now referring to Figure **2****,** process **200** depicts how a videoconferencing system with the capability to display personal identification information of a current speaker may be configured for a multi-location, multi-participant meeting. It should be noted that Figure **2** depicts the setup process at only one of the many meeting locations and the steps depicted may occur at many or all meeting locations prior to the videoconference. As participants arrive in a meeting location prior to the start of the meeting, moderator **(145)** may be tasked with entering each participant into the videoconferencing system. In an alternate embodiment, a single moderator manages all meeting locations from a single location and videoconference setup is performed by the participants themselves. A moderator **(145)** at one or more locations may also be a participant of the videoconference.

Starting with block **210,** once a participant has taken his seat, moderator (145) may zoom a video camera to the participant and create a camera preset associated with the participant and his location. Also at block **210** the video camera may also capture the visual information required for subsequent facial recognition of the participant.

Moving to block **220**, the participant may then identify himself verbally and provide the moderator with pertinent personal information appropriate for the meeting. In one embodiment, the spoken personal information may be recorded with a microphone and converted into text by speech-to-text software on the videoconferencing system. The recorded audio information may also be later used by voice recognition software to identify the participant during the conference. In another embodiment, the participant's personal information may be input manually by moderator **145** or a participant with an input device such as a keyboard or touch screen. Moderator **145** may then associate the personal information provided by participant with the participant and his location as depicted by block **230.** This task may also include associating the participant's personal information with the visual information captured for face recognition and audio information captured for voice recognition.

At block **240,** it is determined whether additional participants at the meeting location need to be entered into the videoconferencing system. If yes, (the YES prong of block **240**) then flow passes back to block **210** and moderator **145** zooms the camera to the next participant and begins the process again. If all participants in a meeting location have been input into the videoconferencing system (the NO prong of block **240**), the meeting begins when videoconference communications have been established with the remote locations as depicted by block **250.**

The personal information of each participant collected in process **200** may be stored at the videoconferencing system endpoint located at each meeting location or it may be stored in a conference bridge controlling the videoconference. In one embodiment, the conference bridge is a Multipoint Control Unit (MCU). Further, the collected personal information may be passed on to other meeting location endpoints, or MCUs, using any number of protocols such as, but not limited to, SIP ID, H323 ID, terminal ID, and Far End Camera Control (FECC) ID.

In an alternate embodiment the call setup process for a meeting room may include a first participant supplying a meeting identification (*e.g.*, typing, speaking, selecting from menu). Next, this first participant and any additional participants at the same location optionally supply personal information via an input means. The bridge/MCU admin may configure what information would be obtained from each participant and an option may be provided for multiple participants in the same room to enter non-redundant information. Alternatively, each participant may swipe his company badge on a badge reading device and the personal information of the participant may be obtained automatically from a corporate server. As each participant swipes his badge, a signal may be sent to the system and the participant's location automatically recorded as a camera preset. Also, the data gathering process could involve a combination of the above where a participant speaks his name and the bridge/MCU obtains the personal information from the corporate server and optionally confirms it with the participant.

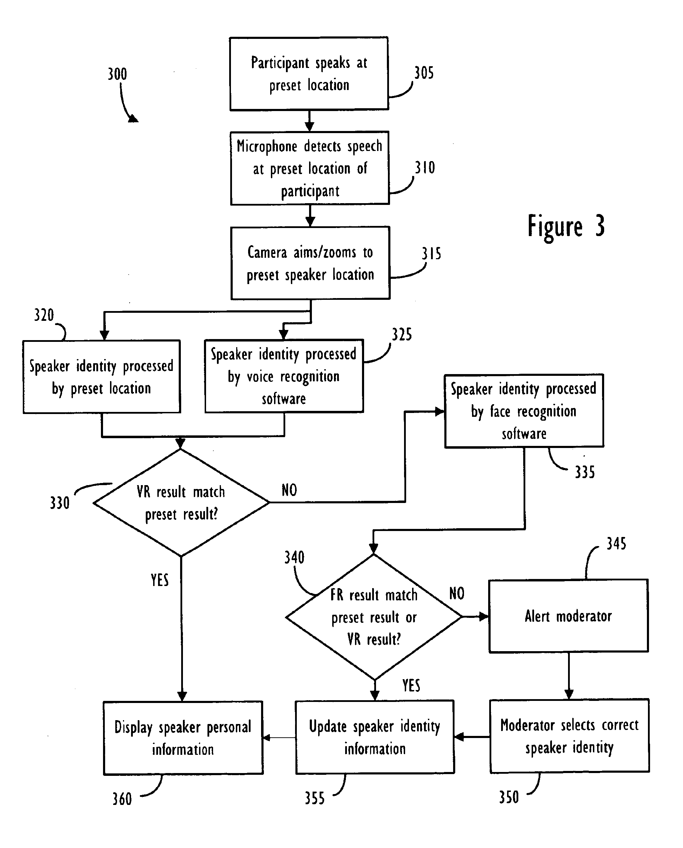

Referring now to Figure **3****,** process **300** depicts the process the videoconferencing system may follow to identify the currently speaking participant and display personal information about the participant. The embodiment described in process **300** refers to the situation where the participant speaking is doing so at the pre-set location which was associated with the participant at block **220** in Figure **2** (*i.e.,* the participant is not moving around). Process **300** starts at block **305** when a participant speaks at his preset location. At block **310,** a microphone detects speech at a preset location of a participant. In one embodiment, the microphone may be a directional microphone in a central location and in another embodiment the microphone may be dedicated to the individual participant's location. In response to the detection of speech, the video camera zooms to the preset speaker location as depicted by block **315**. This may be accomplished through the subject matter described in U.S. patent 6,593,956, issued July 15, 2003, entitled "Locating an Audio Source" by Steven L. Potts et al., which is hereby incorporated by reference.

Flow then continues to blocks **320** and **325** where the speaker identity may be calculated via two different methods. First, speaker identity may be resolved based on the identity associated with the preset location from which the speech emanated. Second, speaker identity may be resolved by voice recognition software running on a processor of the videoconferencing system or a separate processor communicably coupled to the videoconferencing system. The detected speech may be compared against the voice samples acquired at block **220** in Figure **2**. The two speaker identity results may then be compared at block **330.** If the two results both match the same participant (the YES prong of block **330),** the personal information associated the participant is displayed on the videoconference video feed to applicable meeting locations as depicted by block **360.** In one embodiment, the information is contained in an information box configured as to not obscure the image of the current speaker.

If, however, the identity result obtained from the preset location association and the identity result obtained from the voice recognition software do not match (the NO prong of block **330**), flow continues to block **335** where face recognition software attempts to calculate the identity of the speaker. The images of the current speaker may be compared with the video of participants captured during the pre-conference setup at block **210** in Figure **2****.** The system may then compare the speaker identity result from the face recognition software with both the identity result obtained from the preset location association and the identity result obtained from the voice recognition software (block **340)**. If the face recognition result matches either the preset location result or the voice recognition result (the YES prong of block 335), the system may update the participant identity information to improve future speaker identification accuracy as depicted at block **340.**

In one embodiment, a learning algorithm running on the videoconferencing system performs actions to improve the accuracy of the particular identity-detecting element that produced the inconsistent speaker identity result. However, if the speaker identity result calculated by the face recognition software does not match either of the two previous results (the NO prong of block **340**), flow continues to block **345** where the meeting moderator **145** may be alerted to the inconsistent identity results. Moderator **145** may then select the correct speaker identity as depicted in block **350**. After moderator **145** has made his selection, the system is updated to reflect the correct association between the current speaker and participant identity information as described above. Finally, the correct personal information associated with the speaking participant may be displayed on the videoconference video feed as depicted by block **360.**

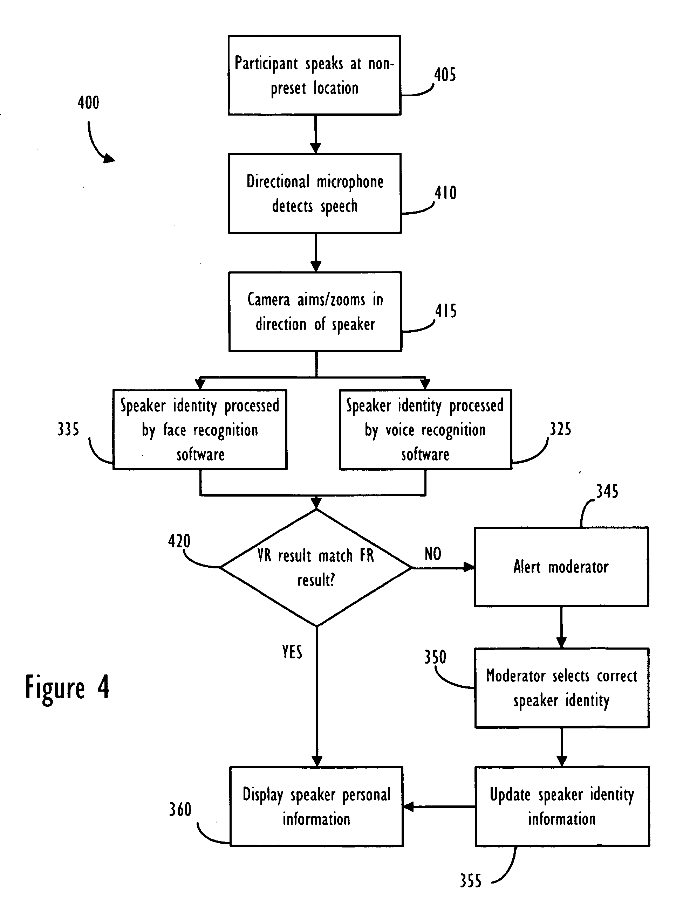

Referring now to Figure 4, process **400** depicts an alternative embodiment of the process the videoconferencing system may follow to identify the current participant speaking and display personal information about the participant. This embodiment addresses the situation where the speaking participant is not at the preset location associated with the participant at block **220** in Figure **2**. For example, this alternate identification process might be employed when the participant has left his seat and is presenting material at a white board.

Process **400** starts at block **405** when a participant speaks from a location other than the location associated with the participant during pre-conference setup. At block **410**, a microphone detects speech from a participant. In one embodiment, the microphone has the capability to detect the direction from which the speech is originating. In response to the detection of speech, the video camera aims and zooms in the direction of the current speaker as depicted by block **415**. Flow continues to blocks **335** and **325** where the speaker identity may be calculated via two different methods.

First, speaker identity may be resolved by face recognition software running on the videoconferencing system. The images of the current speaker may be compared and matched against the video of participants captured during the pre-conference setup at block **210** in Figure **2****.** Second, speaker identity may be resolved by voice recognition software running on the videoconferencing system. The detected speech may be compared with against the voice samples acquired at block **220** in Figure **2****.** The two speaker identity results may then be compared at block **420**. If the two results both match the same participant (the YES prong of block **420**), the personal information associated the participant may be displayed on the videoconference video feed as depicted by block **360**. If, however, the identity result obtained from face recognition software and the identity result obtained from the voice recognition software do not match (the NO prong of block **420**), the flow continues to block **345** where moderator **145** is altered to the inconsistent identity result. Moderator **145** may then select the correct speaker identity as depicted in block **350.** After the moderator has made his selection, the system is updated to reflect the correct association between the current speaker and participant identity information as described above. Finally, the correct personal information associated with the speaking participant may be displayed on the videoconference video feed as depicted by block **360.**

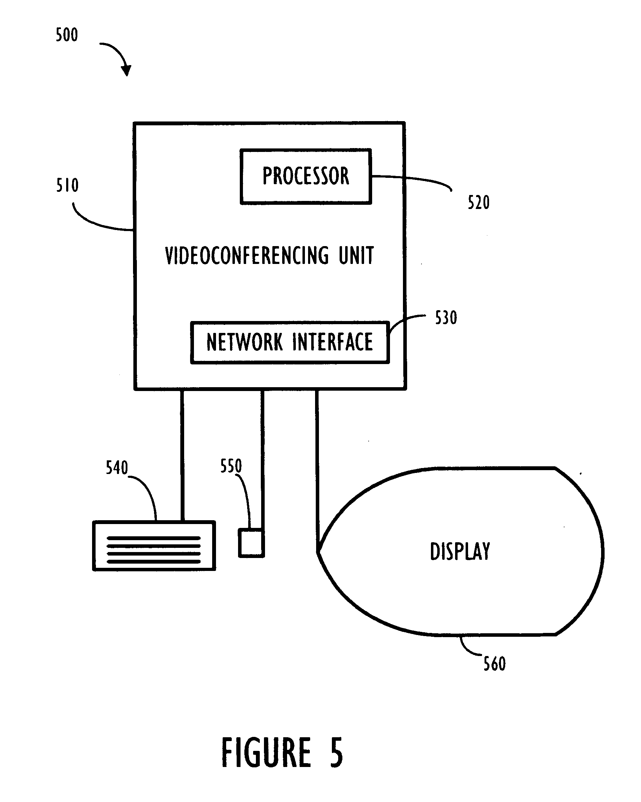

Figure **5** shows a block diagram of one embodiment of a videoconferencing system **500**. The videoconferencing unit **(510)** contains a processor **(520)** which can be programmed to perform various data manipulation and collection functions. The videoconferencing unit **(510)** also contains a network interface **(530)** which is capable of communicating with other network devices using Asynchronous Transfer Mode (ATM), Ethernet, token ring or any other network interface or videoconferencing protocol known to those of skill in the art. Example input devices (keyboard **540** and mouse **550**) are connected to the videoconferencing unit and provide for user interaction with the videoconferencing system. Display **560** is an example output device, which may also comprise a touch screen input capability, for displaying both images and textual information in the form of user menus or input screens as explained throughout this disclosure. Various display devices are known to those of skill in the art and include, but are not limited to, HD monitors, computer screens, cell phones, and television monitors.

In an alternate embodiment, when a participant joins a conference, all other conference participants may be notified with the details and personal information of the new participant(s). Each endpoint (either audio or video) could determine, based on user preferences, how or if it should display this information during an ongoing conference. Similarly, when a participant speaks and is identified, details of the speaking participant may be transmitted to all endpoints and each endpoint could configure how or if it should display this information during the conference.

Various changes in the graphical, as well as, in the details of the illustrated operational methods are possible without departing from the scope of the following claims. For instance, the illustrative process methods **200, 300** and **400** may perform the identified steps in an order different from that disclosed here. Alternatively, some embodiments may combine the activities described herein as being separate steps. Similarly, one or more of the described steps may be omitted, depending upon the specific operational environment the method is being implemented in. In addition, acts in accordance with the methods of this disclosure may be performed by a programmable control device executing instructions organized into one or more program modules. A programmable control device may be a single computer processor, a special purpose processor (*e.g.*, a digital signal processor, "DSP"), a plurality of processors coupled by a communications link or a custom designed state machine. Custom designed state machines may be embodied in a hardware device such as an integrated circuit including, but not limited to, application specific integrated circuits ("ASICs") or field programmable gate array ("FPGAs"). Storage devices suitable for tangibly embodying program instructions include, but are not limited to: magnetic disks (fixed, floppy, and removable) and tape; optical media such as CD-ROMs and digital video disks ("DVDs"); and semiconductor memory devices such as Electrically Programmable Read-Only Memory ("EPROM"), Electrically Erasable Programmable Read-Only Memory ("EEPROM"), Programmable Gate Arrays and flash devices.

## Claims

1. A method of determining and displaying personal information about a currently speaking participant of a audio/videoconference comprising:
detecting audio input from a currently speaking participant;
identifying the currently speaking participant; and
providing personal information associated with the determined identity for display at one or more endpoints of the audio/videoconference.

2. The method of claim 1 further comprising:
positioning the camera toward the currently speaking participant.

3. The method of claim 2 wherein identifying the currently speaking participant includes using face recognition software.

4. The method of claim 2 wherein positioning the camera toward the detected audio input comprises using directional microphones to position the camera toward the currently speaking participant.

5. The method of claim 1 wherein identifying the currently speaking participant comprises using voice recognition software.

6. The method of claim 1 wherein identifying the currently speaking participant includes manually correcting an incorrect automatically determined identity and using the manually corrected information for future automatic determination of the identity of the speaking participant wherein automatic determination is improved for subsequent identification of the speaking participant.

7. The method of claim 1 wherein displaying personal information associated with the determined identity comprises displaying information selected from the group consisting of formal name, title and location.

8. A method of identifying participants in a videoconference call comprising:
storing one or more identification data items unique to a participant for later use in automatically identifying the participant as a currently speaking participant;
obtaining personal information for the participant wherein the personal information is used to identify the currently speaking participant to other participants;
using one or more of the one or more stored identification data items to identify a currently speaking participant; and
providing corresponding obtained personal information for the participant each time a currently speaking participant is identified during the videoconference call.

9. The method of claim 8 wherein the one or more data items unique to a participant are selected from the group consisting of a previously stored physical location of a participant within a conference room, a voice sample for voice recognition, and an image for face recognition.

10. The method of claim 8 wherein using one or more of the one or more stored data items includes independently processing more than one data item from the one or more stored identification data items and verifying that processing of each of the more than one data items consistently identifies the currently speaking participant prior to providing the personal information for the participant.

11. The method of claim 8 wherein obtaining personal information for the participant includes
using speech-to-text capability whereby one or more participants speak their required personal information or
associating pre-defined personal information retrieved from an external source with the participant.

12. The method of claim 8 wherein storing one or more data items unique to a participant includes using a smart card reader to identify the location and personal information for the participant.

13. The method of claim 11 wherein the external source is a smart card reader or a computer server.

14. A videoconferencing system comprising:
a programmable processing unit;
one or more cameras coupled to the programmable processing unit;
a network communication device communicatively coupled to the programmable processing unit; and
a user input coupled to the programmable processing unit;
wherein the programmable processing unit is configured to:
detect audio input;
position the one or more cameras toward the detected audio input;
determine the identity of the speaking participant; and
provide the determined identity to a remote videoconferencing device for use in displaying personal information corresponding to the speaking participant at the remote videoconferencing device.

15. A videoconferencing system comprising:
a programmable processing unit;
one or more cameras and display devices connected to the programmable processing unit;
a network communication device communicatively coupled to the programmable processing unit; and
a user input coupled to the programmable processing unit;
wherein the programmable processing unit is configured to:
store one or more data items of identification information for one or more participants of a videoconference;
obtain personal information for the one or more participants;
use one or more of the stored data items of identification information to determine the identity of a currently speaking participant; and
provide corresponding personal information about the currently speaking participant to one or more remote videoconferencing device.

16. The videoconferencing system of claim 14 or 15 wherein the programmable processing unit is further configured to process the detected audio input and compare the audio input, using voice recognition software, to one or more voice samples for determining the identity of the speaking participant.

17. The videoconferencing system of claim 14 or 15 wherein the programmable processing unit is further configured to process video input from the one or more cameras positioned toward the detected audio input and compare the video input, using face recognition software, to one or more image samples for determining the identity of the speaking participant.

18. The videoconferencing system of claim 14 or 15 further comprising using one or more microphones coupled to the programmable processing unit to aid in positioning the camera toward the detected audio input.

19. The videoconferencing system of claim 14 wherein the user input is selected from the group consisting of a keyboard, a mouse, a smart card reader, a magnetic strip reader or an RFID transceiver.

20. The videoconferencing system of claim 15 wherein the one or more data items of identification information are selected from the group consisting of physical location of a participant within a conference room, voice sample, and image sample.
